Europäisches Patentamt

European Patent Office

Office européen des brevets

(19)

(11) Numéro de publication: **0 016 693
B1**

# (12) FASCICULE DE BREVET EUROPEEN

(45) Date de publication du fascicule du brevet:
08.12.82

(51) Int. Cl.³: **F 24 J 3/02**

(21) Numéro de dépôt: 80400337.4

(22) Date de dépôt: 14.03.80

(54) **Dispositif collecteur d'énergie solaire, et procédé de fabrication d'un tel dispositif.**

(30) Priorité: 16.03.79 FR 7906744
21.08.79 FR 7921087

(43) Date de publication de la demande:
01.10.80 Bulletin 80/20

(45) Mention de la délivrance du brevet:
08.12.82 Bulletin 82/49

(84) Etats contractants désignés:
IT NL

(56) Documents cités:
FR-A-2 349 820
FR-A-2 354 354
FR-A-2 364 413
FR-A-2 390 390
FR-A-2 392 337
FR-A-2 398 981
US-A-3 176 679
US-A-4 059 093

(73) Titulaire: THOMSON-CSF, 173, Boulevard Haussmann,
F-75379 Paris Cedex 08 (FR)

(72) Inventeur: Friederich, Alain, "THOMSON-CSF"
SCPI-173, bld Haussmann, F-75360 Paris Cedex 08 (FR)
Inventeur: Hildebrandt, Mieczylsaw, "THOMSON-CSF"
SCPI-173, bld Haussmann, F-75360 Paris Cedex 08 (FR)
Inventeur: Kaplan, Daniel, "THOMSON-CSF"
SCPI-173, bld Haussmann, F-75360 Paris Cedex 08 (FR)
Inventeur: Herbet, Patrick, "THOMSON-CSF"
SCPI-173, bld Haussmann, F-75360 Paris Cedex 08 (FR)

(74) Mandataire: Wang, Pierre et al, THOMSON-CSF
SCPI 173, Bid Haussmann, F-75379 Paris Cedex 08 (FR)

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

Dispositif collecteur d'énergie solaire, et procédé de fabrication d'un tel dispositif

La présente invention se rapporte à un dispositif collecteur d'énergie solaire et au procédé de fabrication d'un tel dispositif.

Un des modes de récupération de l'énergie solaire consiste à élever la température d'une masse liquide. Il existe essentiellement deux structures de base: une structure plane et une structure tubulaire. Les collecteurs de structure plane se présentent en général sous la forme d'un caisson, au fond duquel circule un liquide à réchauffer dans des serpentins recouverts d'un matériau absorbant; le collecteur étant muni sur sa face supérieure exposée au rayonnement solaire, d'une glace transparente séparée des serpentins par une lame d'air. Ces collecteurs fonctionnent selon le principe de l'effet de serre. Ils ont un rendement acceptable pour une faible élévation de température. Lorsque cette élévation de température augmente le rendement baisse de façon importante. Ceci est dû en partie aux pertes par convexion thermique dans l'air compris entre la glace supérieure et les serpentins. Il est donc souhaitable de réaliser le vide entre la glace supérieure et les éléments absorbants. La structure plane n'est pas adaptée à cette exigence. Aussi, on a proposé des collecteurs d'énergie solaire de forme tubulaires.

L'invention se rapporte plus particulièrement à de tels collecteurs. On peut mettre en oeuvre le principe du caloduc pour le drainage de l'énergie solaire collectée. Celui-ci est constitué par une enveloppe divisée en deux parties: la première partie, exposée aux rayonnements solaires, étant recouverte d'un matériau absorbant et placée sous vide, et la seconde partie étant placée au contact de l'élément à chauffer. L'enveloppe contient un liquide qui se vaporise dans la première partie, absorbant de la chaleur, et se condense dans la seconde partie, libérant ainsi la chaleur précédemment emmaganisée. Le dispositif comporte en outre des moyens pour ramener le fluide en phase liquide vers la première partie du tube.

Le matériau absorbant est en général un oxyde de métal, ou un matériau plastique absorbant.

Il est également connu d'utiliser plusieurs couches de matériaux superposés. Une telle approche est décrite, par exemple, dans le brevet US-A-3 176 679 qui se rapporte à une structure de collecteur sortant du cadre de la présente invention. Le revêtement absorbant comporte trois couches de matériau, la couche intermédiaire formant l'absorbant proprement dit, est constituée d'une mince couche d'un composé verre-métal. L'ensemble est destiné à être déposé sur un support métallique.

Dans l'art connu, plusieurs structures ont été proposées. Selon une première approche, on réalise l'absorbant par dépôt d'une mince couche de métal oxydé sur l'enveloppe intérieure en verre. Le contact thermique absorbant

— caloduc est de bonne qualité. Cependant le métal et le verre ont des coefficients de dilatation très différents et la tenue mécanique en est affectée. Le revêtement a tendance à se décoller.

Dans une seconde approche, le caloduc est réalisé en métal. Il se pose alors le problème du joint verre-métal entre l'enveloppe extérieure et l'enveloppe intérieure. Ce joint devant aussurer l'étanchéité entre un milieu à la pression atmosphérique et l'enceinte entre les deux enveloppes dans laquelle on a effectué un vide poussé.

D'autres solutions ont été également proposées, et en particulier tout en gardant les deux enveloppes, intérieure et extérieure en verre, on a proposé l'adjonction d'éléments métalliques supplémentaires comme absorbant. Dans toutes ces solutions, le contact thermique n'est pas optimum et se fait essentiellement par contact tangentiel suivant une génératrice de l'enveloppe intérieure et éventuellement par rerayonnement.

Pour certaines applications, il est préféré d'autres structures que celle qui vient d'être décrite ne faisant pas appel au principe du caloduc, et notamment une structure dans laquelle un liquide à échauffer circule dans une conduite métallique replié sur elle-même en forme d'épingle à cheveux ou »U«, disposée à l'intérieur de l'enveloppe interne. Pour cette approche, il est nécessaire d'assurer un drainage de la chaleur collectée par l'absorbant vers le liquide circulant dans ce tube. De façon plus générale, il est nécessaire d'obtenir une température homogène à l'intérieur de l'enveloppe interne du collecteur d'énergie solaire.

Pour pallier les inconvénients qui viennent d'être énoncés et augmenter la qualité du drainage de l'énergie solaire collectée, l'invention propose l'utilisation d'un composé verre-métal réalisant un contact thermique de très bonne qualité tout en conservant une bonne tenue mécanique, sur lequel on peut déposer l'absorbant solaire. Ce composé verre-métal peut servir également à la soudure d'éléments métalliques sur les enveloppes en verre.

L'invention a donc pour objet un dispositif collecteur d'énergie solaire tel que décrit dans la revendication 1. Des modes particuliers de réalisation sont définis dans les revendications dépendantes.

L'invention a encore pour objet le procédé de fabrication d'un tel dispositif collecteur d'énergie solaire, comme décrit dans la revendication 14. Des modes particuliers de réalisation sont définis dans les revendications dépendantes.

L'invention sera mieux comprise et d'autres caractéristiques apparaitront à l'aide de la description qui suit, en référence aux figures annexées parmi lesquelles:

la figure 1 est une vue en coupe longitudinale d'un dispositif collecteur d'énergie solaire selon une première approche dans lequel l'invention peut être mise en oeuvre;

la figure 2 est un vue en coupe transversale du dispositif représenté sur la figure 1;

les figures 3 et 4 sont des exemples de dispositifs de l'art connu;

les figures 5 et 6 sont des vues partielles, en coupe transversale, de deux variantes de dispositif selon la première approche;

les figures 7 à 10 sont relatives à deux exemples de réalisations particulières applicables aux dispositifs de l'invention;

la figure 11 illustre un dispositif collecteur d'énergie solaire selon une autre approche de l'art connu;

les figures 12 à 14 illustrent l'adaptation de l'invention à un dispositif collecteur d'énergie solaire selon cette approche;

la figure 15 illustre une des étapes du procédé de fabrication d'un tel collecteur.

Dans la description qui va suivre, les éléments communs à deux figures ou plus portent la même référence et ne seront décrits qu'une seule fois.

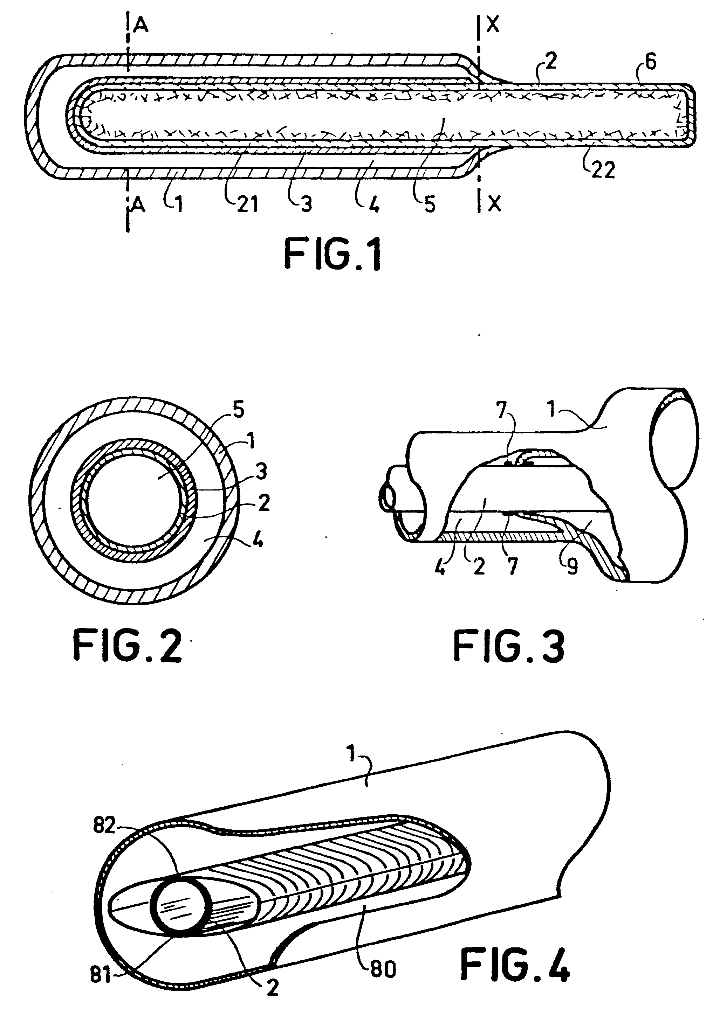

La figure 1 illustre une structure de collecteur d'énergie solaire commune avec l'art connu mais utilisable dans le cadre de l'invention.

Sur la figure 1 est représentée une enveloppe 2 fermée transparente en verre et de forme cylindrique par exemple, comportant deux parties 21 et 22, dont la séparation est illustrée par un axe XX.

La première partie (21) de l'enveloppe 2, est appelée évaporateur, et placée sous vide dans une seconde enveloppe 1 et exposée au rayonnement solaire. Elle est représentée en coupe transversale, selon l'axe AA, sur la figure 2.

L'enveloppe 1 est constituée par du verre.

Le vide est réalisé à l'intérieur 5 de l'enveloppe 2 par tout moyen approprié bien connu de l'homme de métier. En pratique, la pression dans cette enveloppe est de l'ordre de $10^{-5}$ Pascal. Cette pression est maintenue à l'aide de dispositifs connus dans le domaine des tubes électroniques, notamment sous le nom de »getters«, ayant pour fonction d'absorber les molécules présentes dans l'enveloppe 2 et réalisés à l'aide d'un métal alcalin par exemple. L'enveloppe 1 est soudée sur l'enveloppe 2 par fusion intime des verres de l'enveloppe 1 et de l'enveloppe 2 ou par scellement à l'aide d'une colle verre-verre ou tout autre matériau utilisé dans la technique du vide. On crée ainsi une enceinte 4 dans laquelle le vide est réalisé également.

L'enveloppe 2 dans la partie 21, appelée évaporateur, est recouverte d'une couche absorbante 3, constituée d'un matériau présentant un faible coefficient d'émittivité ($\varepsilon$) et un coefficient d'absorptivité ($\alpha$) élevé, afin que le rapport $\dfrac{\alpha}{\varepsilon}$ soit le plus élevé possible. On définit ainsi le coefficient de qualité de l'absorbant.

L'enveloppe 2 contient un liquide imprégnant un système capillaire 6 en forme de »doit de gant« placé contre la paroi interne de l'enveloppe, constitué par exemple par une toile ou des fils, en fibres naturelles ou artificielles.

Le liquide choisi doit avoir une chaleur latente de vaporisation élevée. afin d'emmagasiner une grande quantité de chaleur. Les liquides qui conviennent sont, par exemple, l'eau, le glycol, l'alcool, l'ammoniaque ou un mélange de ces corps.

Le fonctionnement du dispositif est le suivant: le flux solaire incident capté par le dispositif dans la zone 21 vaporise le liquide. La vapeur ainsi produite se déplace vers le point froid qui est dans la zone 22, ou condenseur, où elle se condense en perdant de la chaleur au profit du milieu à échauffer. Le liquide condensé revient alors vers la partie 21, ou évaporateur, grâce au système capillaire 6. La zone 22 est en général en contact sur sa face extérieure avec un liquide dans lequel est transferée l'énergie solaire captée. Plusieurs collecteurs d'énergie solaire tel que celui de la figure 1 peuvent être assemblés dans un même bâti pour additionner leur effet.

La structure du dispositif collecteur d'énergie solaire de la figure 1 est décrit avec plus de détails dans la demande de brevet français No 7 613 002, déposée le 30. Avril 1976 et publiée sous le No 2 349 802.

D'autres collecteurs de l'art connu ont une structure analogue à celle de la figure 1. Dans tous structure analogue à celle de la figure 1. Dans tous ces collecteurs, l'absorbant est constitué par un métal déposé sur l'enveloppe intérieure. Le revêtement métallique a un coefficient de dilatation différent de celui du verre de l'enveloppe intérieure. L'enveloppe intérieure et le revêtement étant soumis à des contraintes thermiques importantes, il s'en suit que la tenue métallique de ce revêtement n'est pas satisfaisante.

Les figures 3 et 4 illustrent deux autres structures de l'art connu. Sur la figure 3, l'enveloppe intérieure est en métal. La jonction entre l'enveloppe extérieure 1 et l'enveloppe intérieure 2 se fait à l'aide d'une soudure métal-verre 7. Cette jonction doit assurer l'étanchéité entre le compartiment 4 et le compartiment 9. Le compartiment 9 est à la pression atmosphérique, il s'en suit que la différence de pression entre les deux compartiments 4 et 9 est de l'ordre de $10^5$ Pascal, ce qui entraine de sérieuses difficultés de réalisation.

Sur la figure 4, l'absorbant est constitué par deux feuilles de cuivre 80 oxydées; les enveloppes intérieures 2 et extérieures 1 étant en verre. On voit que le contact thermique est assuré exxentiellement suivant les deux génératrices 81 et 82. Cette structure n'est donc pas optimisée.

L'invention tout en conservant les avantages de la structure de la figure 1: un bon contact thermique entre l'absorbant et l'enveloppe intérieure et réalisation aisée par les techniques connues dans la fabrication des tubes à vide, va pallier les inconvénients de l'art connu. L'absorbant selon l'invention va être constitué par un matériau à base d'un composé verre-métal, à pourcentage variable, c'est à dire un mélange analogue aux composés céramique-métal, dits »cermets«. Le verre peut être du même type que celui utilisé pour l'enveloppe intérieure. La présence du verre supprime toute difficulté d'ahdérence. D'autre part, le métal deuxième élément du composé verre-métal, assure d'une part une bonne conductivité thermique et, d'autre part, permet une oxydation directe ou une soudure sur ce métal, ou encore un dépôt de métal sur le composé verre-métal par électrolyse.

Le composé verre-métal peut être déposée par sérigraphie ou peinture sur l'enveloppe intérieure servant de caloduc. Ce composé est ensuite chauffé à haute température pour qu'il se forme un eutectique »verre du composé-verre de l'enveloppe«.

On obtient alors un revêtement de haute conductivité thermique.

L'efficacité de l'absorption après oxydation dépend du rapport métal/verre. Le rapport $\dfrac{a}{\varepsilon}$ qui définit le coefficient de qualité de l'absorbant, ainsi que le coefficient d'absorption $\alpha$, dépen- dent de la granulométrie du composé verre-mé- tal. $\dfrac{a}{\varepsilon}$ et $\alpha$ croissent pour des grains de plus en plus petits. Il faut cependant remarquer que la qualité de l'adhérence du composé sur le support en verre croit dans un rapport inverse. A partir de ces constatations, l'invention propose plusieurs variantes:

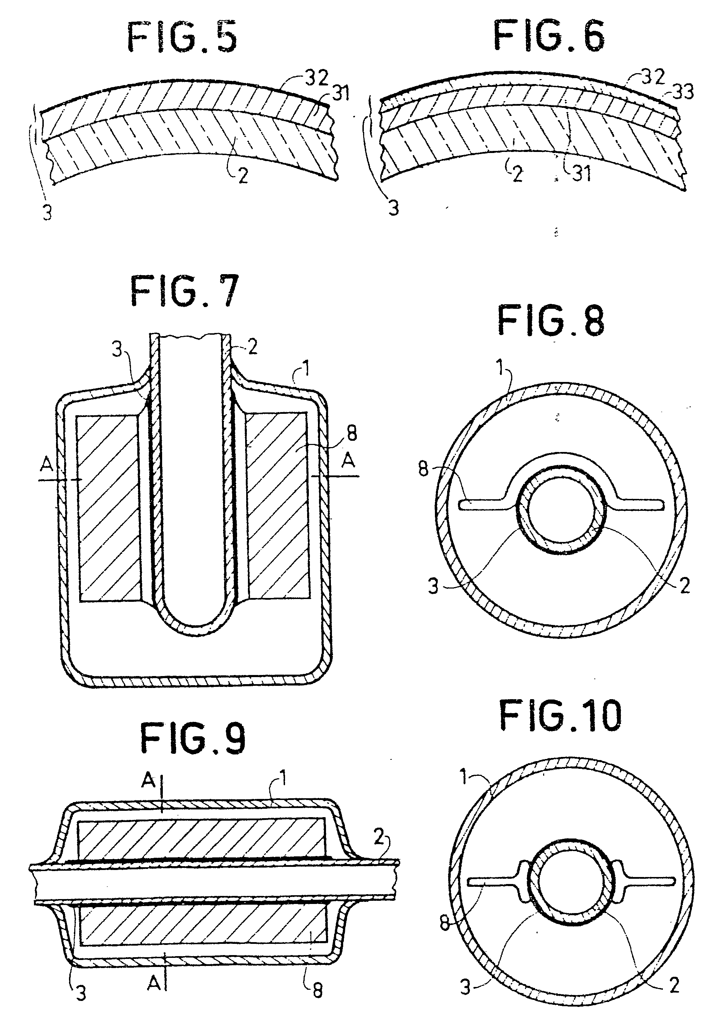

La figure 5 est une première variante. La couche d'absorbant 3 est constituée par une couche de composé verre-métal 31 déposée sur le support en verre 2 et d'une couche d'oxyde du métal contenu dans le composé. Cet oxyde est obtenu par oxydation directe du métal du composé verre-métal. Cette structure est particulièrement adaptée à un grain fin.

La figure 6 est une seconde variante selon l'invention. Le matériau absorbant est constitué par trois couches successives: une couche de composé verre-métal 31, une couche métallique 33 et une couche d'oxyde de métal 32. La couche métallique 33 est obtenue par électrolyse du composé 31, suivie d'une oxydation formant la couche 32. Cette structure est particulièrement adaptée à un composé à gros grain. La qualité de l'absorbant est améliorée de deux façons: d'une part la couche composite métal 33-oxyde de métal 32 a un bon coefficient d'absorption, d'autre part la surface obtenue par électrolyse a un aspect rugueux du type surface dendritique qui améliore le coefficient $\alpha$. L'adhérence de la couche métallique ne se fait plus directement comme dans l'art connu sur le verre du caloduc mais sur le composé verre-métal. On évite de ce fait les inconvénients de l'art connu.

On peut combiner les avantages des structures des figures 5, c'est à dire notamment une bonne adhérence, et figure 6, c'est à dire une meilleure absorption. Pour ce faire on rend le composé verre-métal hétérogène dans une direction normale à la surface du caloduc 2. Après dépôt, on fait varier le rapport métal-verre par centrifugation à chaud de telle sorte que ce rapport varie de manière à ce que la concentration en métal augmente en surface. La couche profonde de composé garde une bonne adhérence alors que la couche superficielle devient plus riche en métal.

La surface d'absorption peut être encore améliorée en soudant des aillettes métalliques sur l'absorbant. Ensuite le composé verre-métal et le métal de ces aillettes sont oxydés. Les figures 7 à 10 décrivent deux exemples d'une telle réalisation.

Sur la figure 7, une aillette 8 par exemple en cuivre épousant la forme du caloduc 2 est soudée sur l'absorbant 3.

La figure 8 est une vue transversale suivant l'axe AA de la figure 7.

Le collecteur d'énergie solaire de la figure 9 comporte, par exemple, deux aillettes 8 situées de part et d'autre du caloduc et soudées directement sur l'absorbant 3. A titre illustratif, il est décrit une structure de caloduc 2 traversant de part en part l'enceinte 1. Comme précédemment la figure 10 est une vue en coupe transversale suivant l'axe AA de la figure 9. D'autres configurations sont possibles, sans sortir du cadre de l'invention.

Un exemple intéressant de métal est le cuivre. L'oxyde de cuivre CuO est un excellent absorbant solaire. Pour une couche d'épaisseur 1 μm on obtient un coefficient d'absorption $\alpha$ de 90 à 95% du spectre solaire. Si cette couche d'oxyde pouvait être générée par oxydation d'une plaque de cuivre massive, on obtiendrait des facteurs de qualité $\dfrac{a}{\varepsilon}$ d'environ 20 à une température de l'absorbant d'environ 150°C. Dans le cas de la structure de la figure 5, on peut se rapprocher de ce rapport, mais $\alpha$ diminue en proportion de la densité du composé verre-métal. Dans le cas de la structure de la figure 6, on se rapproche du cas idéal: »oxydation sur cuivre massif«. D'autre part, comme il a été signalé, on améliore le coefficient $\alpha$ par l'aspect rugueux donné à la surface métallique par électrolyse.

Le rendement d'un collecteur d'énergie solaire réalisé selon l'invention atteint 80%.

Dans ce qui suit on va décrire le procédé de fabrication du collecteur d'énergie solaire, de façon détaillée et en particulier le procédé d'obtention de l'absorbant et son application sur l'enveloppe interne.

Le matériau de base constituant l'absorbant est obtenu en mélangeant de la poudre de cuivre très fine (ou de l'oxyde de cuivre en poudre réduit) avec de la poudre de verre. Les grains de cuivre doivent avoir une grosseur maximale de l'ordre de quelques centièmes de microns; les grains de verre une grosseur de l'ordre de quelques centièmes de microns à quelques microns. Le mélange se fait dans un pourcentage de 70 à 95% pour le métal et de 30 à 5% pour le verre. Le verre est choisi parmi ceux ayant un point de ramollissement compris entre 550 et 700°C. La température atteinte par le collecteur solaire en fonctionnement reste en dessous de ces valeurs. Elle est de l'ordre de 350°C. Le mélange ainsi obtenu est mis en suspension dans un liant organique. Ce peut être par exemple du latex dissout dans du dichloroethane.

Le mélange est ensuite appliqué sur l'enveloppe interne en verre (ou caloduc). L'application peut se faire au pistolet, au pinceau ou par mouillage (utilisation de l'effet de capillarité). Si on désire ensuite obtenir une structure hétérogène du composé verre-métal, on fait suivre cette étape d'une étape de centrifugation. La couche supérieure du mélange va s'enrichir en métal. Le liant doit ensuite être éliminé. Cette élimination se fait par cuisson à l'air libre à une température de 300 à 500°C. Cette cuisson occasionne l'oxydation du métal et doit être suivie d'un traitement hтермique en atmosphère réductrice, par exemple dans de l'hydrogène. La température est augmentée de façon à atteindre le point de ramollissement du verre contenu dans· l'absorbant ainsi que celui du verre de l'enveloppe. Ces deux verres sont de préférence du même type et lorsque la température suffisante est atteinte, il se forme un eutectique, assurant ainsi une adhérence parfaite du mélange verre-métal sur le caloduc. L'épaisseur de la couche ainsi formée doit être de l'ordre de 100 μm à 1 mm.

Pour obtenir la structure de la figure 6, on peut déposer à ce stade une couche supplémentaire de métal par électrolyse et/ou éventuellement effectuer la soudure des ailettes de métal (figures 7 à 10).

La dernière étape consiste à oxyder soit la couche superficielle du composé verre-métal (figure 5), soit la couche de métal déposée par électrolyse (figure 6). Les ailettes éventuelles en métal (figures 7 à 10) sont également oxydées. Pour ce faire le caloduc, recouvert par le composé verre-métal est trempé dans un bain oxydant.

Les enveloppes internes et externes en verre sont obtenues par les procédés classiques utilisés dans l'industrie des tubes à vide. Il en est de même pour la soudure verre-verre à la jonction des deux enveloppes. Ces procédés sont bien connus de l'homme de métier.

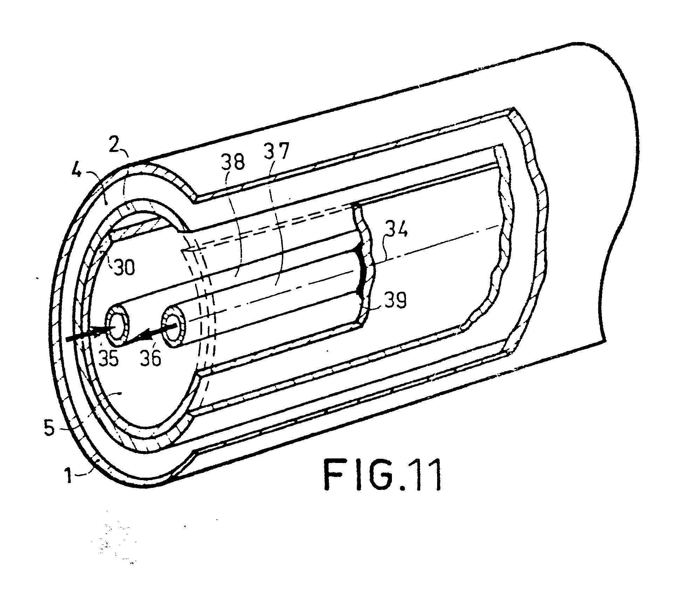

Pour certaines applications, d'autres structures et notamment la structure illustrée par la figure 11 sont préférées. Le collecteur d'énergie solaire comprend comme précédemment décrit une enveloppe externe en verre 1 et une enveloppe interne 2, également en verre 8, entre lesquelles un vide de l'ordre de 10⁻⁵ Pascal a été créé. Par contre, un liquide à échauffer circule dans une conduite métallique en forme d'épingle à cheveux ou de »U«, à deux branches 37 – 38, placée à l'intérieur de l'enveloppe 1 et dans la partie de cette enveloppe soumise au rayonnement solaire, c'est à dire à celle correspondant à la partie 21 du collecteur de la figure 1. Sur la figure 11, la circulation du liquide est symbolisée par les flèches 35 et 36. Le fluide peut être par exemple de l'eau. Selon cette structure, les moyens absorbant l'énergie solaire sont constitués par une mince feuille de cuivre 30, légèrement élastique et placée à l'intérieur de l'enveloppe 2 en contact avec la paroi interne de cette enveloppe: la conduite dans laquelle circule le fluide à échauffer, c'est à dire le fluide caloporteur, est maintenu par soudure 39 selon une génératrice 34. Le drainage de la chaleur n'est pas optimum, ce dû en grande partie au contact thermique non homogène entre la feuille de cuivre 30 et la paroi 2.

L'invention peut également être mise à profit dans le cadre de cette structure et permet en outre, grâce à des dipositions supplémentaires qui vont être décrites ultérieurement, d'améliorer le drainage de l'énergie solaire collectée· et d'assurer une homogénéité en température à l'intérieur de l'enveloppe 2, tout en conservant les avantages qui ont été exposés précédemment.

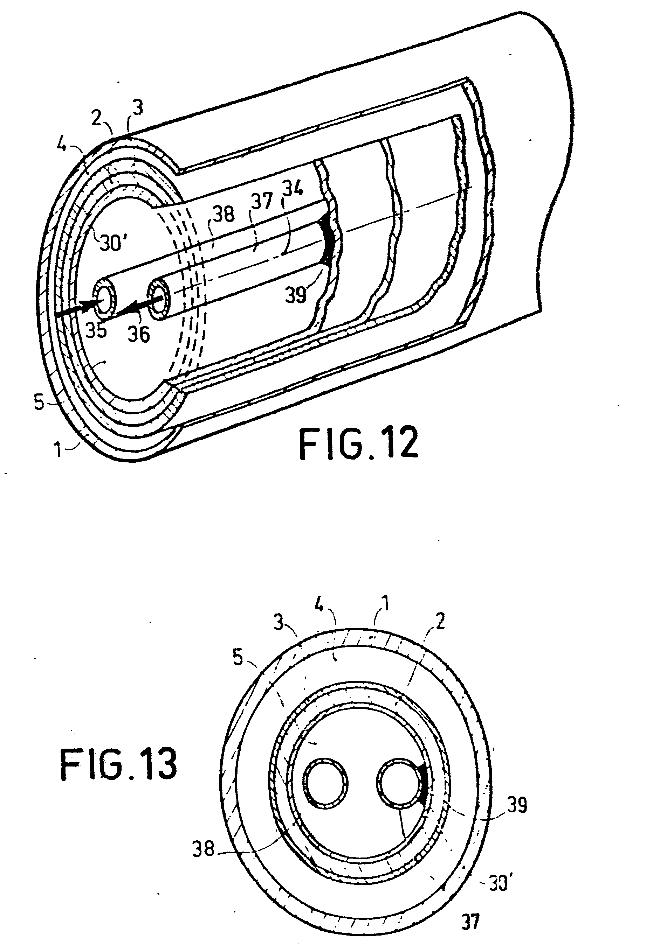

Une structure mettant en oeuvre l'invention va être décrite en relation avec les figures 12 à 14.

Le collecteur illustré sur la figure 12 conserve la structure générale du collecteur de la figure 11.

Les moyens absorbant l'énergie solaire sont constitués, comme précédemment par une couche de composé verre-métal et au moins une couche d'oxyde de ce métal, l'ensemble sous la référence 3. En outre, une couche de composé verre-métal 30′ est également déposée sur la paroi interne de l'enveloppe 2. Du fait de la haute conductivité thermique, le composé verre-métal selon la demande de brevet principal comportant un pourcentage de métal compris dans la gamme 70 à 95%, cette couche 30′ homogénise la température à l'intérieur de l'enveloppe 2 et d'autre part permet une soudure directe de l'une des branches de la ·conduite en épingle à cheveux 37 sur la couche 30′. Le drainage de l'énergie solaire collectée par les moyens absorbant est ainsi réalisé dans de très bonnes conditions. L'ordre de grandeur de l'épaisseur de la couche 30′ peut également se situer dans la gamme 100 μm à 1 mm.

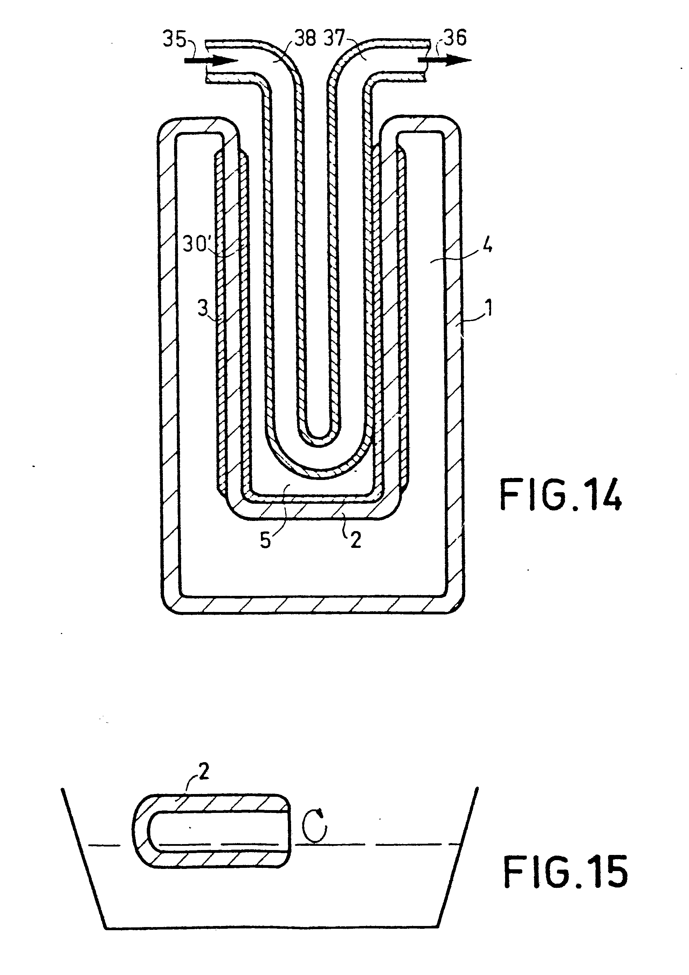

Les figures 13 et 14 sont les vues en coupe, respectivement transversale et longitudinale, du collecteur de la figure 12.

Le procédé de fabrication d'un collecteur d'énergie solaire selon cette approche comporte toutes les étapes du procédé de fabrication décrit pour l'approche précédemment décrite qui ne seront pas rappelées. Il est procédé en outre à deux étapes supplémentaires: le dépôt sur la paroi interne de l'enveloppe 2 d'une couche du composé verre-métal et l'opération consistant à souder la conduite à deux branches, en »U«: 37−38 sur ce dépôt. Le dépôt de la couche verre-métal 30′ se fait simultanément avec le dépôt de la couche support de l'absorbant d'énergie solaire sur la face externe de l'enveloppe 2. La soudure de la conduite métallique 37−38 se fait avant l'étape d'oxydation. Pour ce faire on peut déposer dans l'enveloppe interne de la soudure et en maintenant la conduite en »U« en contact avec la paroi de la couche 30′, chauffer jusqu'à fusion.

Plus spécifiquement, pour le dépôt du composé verre-métal sur la paroi interne de l'enveloppe 2, l'application peut se faire par mouillage (utilisation de l'effet de capilarité). Cette étape est illustrée schématiquement par la figure 15.

L'approche qui vient d'être décrite n'est pas limitée à la seule structure illustrée par les figures 12 à 14, et notamment à la forme particulière de la conduite caloporteuse en U. Cette conduite peut avoir toute forme appropriée et, par exemple non limitatif, la forme d'un serpentin placé à l'intérieur de l'enveloppe 2. Enfin, les moyens absorbants l'énergie solaire, symbolisés par le revêtement 3, peuvent être réalisés selon l'une quelconque des variantes décrites précédemment. Il en est de même pour les ailettes soudées sur la couche métallique ou le composé verre-métal.

· De plus d'autres metaux que le cuivre sont utilisables pour la réalisation de l'absorbant selon l'invention, en particulier le chrome et les oxydes de chrome: $CrO$, $Cr_2O_3$, ou le manganèse et l'oxyde de manganèse: $MnO$. On peut encore utiliser un alliage de ces métaux.

Si la réflectivité dans l'infra-rouge du support de l'absorbant est inférieure à 90%, on peut améliorer les performances du dispositif collecteur de l'énergie solaire en déposant sur la face intérieure de l'enveloppe externe une couche semi-refléchissante d'oxyde d'indium ($In_2O_3$), déposé à l'étain. Cette couche laisse passer le spectre solaire et réfléchit l'infra-rouge. Son épaisseur doit être de l'ordre de 7000 Å à 0,01 mm.

Enfin, on peut encore améliorer le rendement du collecteur en disposant des miroirs réfléchissants, soit à l'intérieur du collecteur, c'est à dire entre les premières et secondes enveloppes, soit à l'extérieur. La forme de ces miroirs sera déterminée de telle façon que les rayons réfléchis se concentrent sur l'absorbant. Ces dispositions particulières sont bien connues de l'homme de métier et sortent du cadre de l'invention.

**Revendications**

1. Dispositif collecteur d'énergie solaire comprenant une première enveloppe en verre (2), associée à des moyens absorbants (3) le rayonnement solaire constitués par un revêtement disposé sur une des faces de la première enveloppe, ce revêtement (3) comprenant au moins une couche superficielle (32), constituée par un oxyde de métal; et une seconde enveloppe en verre (1), placée autour de la première enveloppe et reliée à celle-ci de façon à créer une enceinte fermée (4) entre ces deux enveloppes; dispositif caractérisé en ce que une couche de matériau (31) constituée par un composé verremétal est déposée au moins sur la face de la première enveloppe supportant ledit revêtement: la couche de composé verre-métal formant une des couches dudit revêtement.

2. Dispositif selon la revendication 1, caractérisé en ce que le revêtement (3) comprend en outre une couche supplémentaire (33), intermédiaire entre la couche superficielle d'oxyde de métal (32) et la couche de composé verre-métal (31) constituée par du métal déposé par électrolyse sur la couche de composé verre-métal.

3. Dispositif selon l'une quelconque des revendications 1 à 2, caractérisé en ce que le composé verre-métal est homogène en tout point du revêtement.

4. Dispositif selon l'une quelconque des revendications 1 à 2, caractérisé en ce que les concentrations relatives verre-métal du composé varient selon une loi prédéterminée, de telle sorte que le composé s'enrichisse en métal dans sa partie supperficielle en contact avec la couche d'oxyde de métal ou la couche supplémentaire en métal (33).

5. Dispositif suivant l'une quelconque des revendications 1 à 4, caractérisé en ce que le verre constituant lesdites première (2) et seconde enveloppes (1) est identique à celui du composé verre-métal.

6. Dispositif selon l'une quelconque des revendications 1 à 5, caractérisé en ce que le métal du composé verre-métal est choisi parmi les métaux suivants: cuivre, manganèse ou chrome; ou un alliage de ces métaux.

7. Dispositif selon l'une quelconque des revendications 1 à 6, caractérisé en ce que en outre des ailettes (8) sont soudées sur la cou douche en composé verre-métal (31) ou la couche supplémentaire en métal (33).

8. Dispositif selon la revendication 7, caractérisé en ce que les ailettes (8) sont constituées par une feuille en métal identique à celui du composé verre-métal; les plans formés par chacune des feuilles de métal étant normaux à la surface de la couche en composé verre-métal (31) ou à la couche supplémentaire en métal (33).

9. Dispositif selon l'une quelconque des revendications 1 à 8, caractérisé en ce que la face interne de la seconde enveloppe (1) est recouverte en outre par un dépôt de matériau semi-réfléchissant, ce matériau étant de l'oxyde d'indium $In_2O_3$, dopé à l'étain.

10. Dispositif selon l'une quelconque des revendications 1 à 9, caractérisé en ce que, le revêtement absorbant l'énergie solaire (3) étant disposé sur la face externe de la première enveloppe (2), une couche du composé verre-métal (30') est également déposée sur la face interne de cette enveloppe.

11. Dispositif selon la revendication 10, caractérisé en ce qu'une conduite métallique (37 – 38) dans laquelle circule un fluide (35 – 36) destiné à être réchauffé par le rayonnement solaire étant disposée à l'intérieur de la première enveloppe (2), la paroi externe d'au moins une partie de la conduite est soudée (39) sur la couche de composé verre-métal (30').

12. Dispositif selon la revendication 11, caractérisé en ce qu'à l'intérieur de la première enveloppe, la conduite (37 – 38) a la forme d'un »U« allongé et en ce que sa section étant circulaire, la conduite est soudée (39) à la couche de composé verre-métal (30') le long d'une génératrice (34) d'une des branches du »U« (37).

13. Dispositif selon l'une quelconque des revendications 1 à 12, caractérisé en ce que les couches de composé verre-métal ont une épaisseur comprise dans la gamme 100 µm à 1 mm.

14. Procédé de fabrication d'un dispositif selon l'une quelconque des revendications à 1 13, caractérisé en ce que pour la phase d'obtention de l'absorbant (3) et de son application sur la première enveloppe (2), il est procédé aux étapes suivantes:

— mélange d'une poudre de verre avec de la poudre de métal; la proportion volumique de métal étant comprise dans la gamme de 70 à 95%;

— suspension du mélange dans un liant organique et application sur la première enveloppe (2) d'une couche (31) du matériau ainsi obtenu;

— élimination du liant organique par cuisson à l'air libre à une température comprise dans la gamme de 300 à 500°C, suivie d'un traitement thermique en atmosphère réductrice à la température de ramollissement du verre constituant la première enveloppe (2) et du verre du composé verre-métal; la température de ramollissement étant choisie dans la gamme de 550 à 700°C;

— et oxydation directe de la couche (31) de matériau appliqué sur la première enveloppe (2) pour constituer une couche absorbante (32), par trempé de la première enveloppe (2) recouverte de la couche (31) matériau dans un bain oxydant.

15. Procédé selon la revendication 14, caractérisé en ce que l'application sur la première enveloppe (2) du mélange de poudre de verre avec de la poudre de métal en suspension dans un liant organique se fait par peinture au pistolet, peinture au pinceau ou par mouillage.

16. Procédé selon l'une quelconque des revendications 14 ou 15, caractérisé en ce qu'il comporte une première étape supplémentaire de centrifugation, après application sur la première enveloppe (2) du mélange de poudre de verre avec la poudre de métal en suspension dans un liant organique, de façon à obtenir une plus grande proportion de métal dans les zones supérieures de la couche (31) de matériau appliqué sur la première enveloppe (2).

17. Procédé selon l'une quelconque des revendications 14 ou 15, caractérisé en ce qu'il comprend une deuxième étape supplémentaire pendant laquelle une couche de métal (33) est déposée par électrolyse sur la couche (31) du matériau appliqué sur la première enveloppe (2).

18. Procédé selon l'une quelconque des revendications 14 à 17, caractérisé en ce qu'il comporte une troisième étape supplémentaire pendant laquelle une ailette (8) constituée par une feuille de métal est soudée sur les couches de matériau (31 – 33), déposées sur la première enveloppe (2).

19. Procédé selon l'une quelconque des revendications 14 à 18, caractérisé en ce que le mélange de poudre de métal avec de la poudre de verre en suspension dans un liant étant appliqué sur la face externe de la première enveloppe (2) pour constituer la première couche (31) du revêtement absorbant l'énergie solaire, une couche (30') de ce mélange est également appliquée sur la face interne de la première enveloppe (2).

20. Procédé selon la revendication 19, caractérisé en ce que l'application se fait par mouillage.

21. Procédé selon la revendication 19, caractérisé en ce qu'il est procédé à une quatrième étape supplémentaire au cours de laquelle une conduite métallique (37 – 38) est soudée sur le couches (31 – 33) de matériau appliquées sur la face interne de la première enveloppe (2).

**Patentansprüche.**

1. Sonnenenergiekollektor mit einer ersten Hülle (2) aus Glas, die Absorptionsmitteln (3) zum Absorbieren der Sonnenstrahlung zugeordnet ist, welche gebildet sind durch eine Beschichtung, die auf einer der Flächen der ersten Hülle angeordnet ist, wobei diese Beschichtung (3) wenigstens eine Oberflächenschicht (32) umfaßt, die aus einem Metalloxid gebildet ist; und mit einer zweiten Hülle (1) aus Glas, die um die erste Hülse herum angeordnet und mit dieser derart verbunden ist, daß zwischen diesen beiden Hüllen ein geschlossenes Gehäuse (4) gebildet ist; dadurch gekennzeichnet, daß eine Schicht (31) aus einem Material, das durch eine Glas-Metall-Verbindung gebildet ist, wenigstens auf der Fläche der ersten Hülle aufgebracht ist, welche diese Beschichtung trägt, wobei die Glas-Metall-Verbindung eine der Schichten der Beschichtung bildet.

2. Vorrichtung nach Anspruch 1, dadurch gekennzeichnet, daß die Beschichtung (3) ferner eine zusätzliche Schicht (33) umfaßt, die zwischen der Metalloxid-Oberflächenschicht (32) und der Schicht (31) aus der Glas-Metall-Verbindung angeordnet und aus einem Metall gebildet ist, das durch Elektrolyse auf der Glas-Metall-Verbindung-Schicht niedergeschlagen ist.

3. Vorrichtung nach Anspruch 1 oder 2, dadurch gekennzeichnet, daß die Glas-Metall-Verbindung an jeder Stelle der Beschichtung homogen ist.

4. Vorrichtung nach Anspruch 1 oder 2, dadurch gekennzeichnet, daß die Glas-Metall-Relativkonzentrationen der Verbindung sich nach einem vorbestimmten Gesetz so ändern, daß die Verbindung in ihrem Oberflächenbereich, der in Berührung mit der Metalloxidschicht oder mit der zusätzlichen Metallschicht (33) ist, mit Metall angereichert wird.

5. Vorrichtung nach einem der Ansprüche 1 bis 4, dadurch gekennzeichnet, daß das die erste (2) und die zweite (1) Hülle bildende Glas dasselbe wie dasjenige der Glas-Metall-Verbindung ist.

6. Vorrichtung nach einem der Ansprüche 1 bis 5, dadurch gekennzeichnet, daß das Metall der Glas-Metall-Verbindung unter den folgenden Metallen ausgewählt ist: Kupfer, Mangan oder Chrom; oder eine Legierung dieser Metalle.

7. Vorrichtung nach einem der Ansprüche 1 bis 6, dadurch gekennzeichnet, daß ferner auf der Schicht (31) aus der Glas-Metall-Verbindung oder auf der zusätzlichen Schicht (33) aus Metall Rippen (8) aufgeschweißt sind.

8. Vorrichtung nach Anspruch 7, dadurch gekennzeichnet, daß die Rippen (8) aus einer Metallfolie aus demselben Metall wie das der Glas-Metall-Verbindung gebildet sind; wobei die Ebenen, die durch jede der Metallfolien gebildet sind, senkrecht zur Oberfläche der Schicht (31) aus der Glas-Metall-Verbindung oder zu der zusätzlichen Metallschicht (33) sind.

9. Vorrichtung nach einem der Ansprüche 1 bis 8, dadurch gekennzeichnet, daß die Innenseite der zweiten Hülle (1) ferner von einer Ablagerung aus halbreflektierendem Material bedeckt ist, wobei dieses Material zinndotiertes Indiumoxid $In_2O_3$ ist.

10. Vorrichtung nach einem der Ansprüche 1 bis 9, dadurch gekennzeichnet, daß bei Anordnung der die Sonnenenergie absorbierenden Beschichtung (3) auf der Außenseite der ersten Hülle (2) eine Schicht (30') aus der Glas-Metall-Verbindung auch auf der Innenfläche dieser Hülle aufgebracht ist.

11. Vorrichtung nach Anspruch 10, dadurch gekennzeichnet, daß eine Metalleitung (37 − 38), in der ein zur Erwärmung durch die Sonnenstrahlung bestimmtes Fluid (35 − 36) fließt, im Inneren der ersten Hülle (2) angeordnet ist, wobei die Außenwandung wenigstens eines Teiles der Leitung auf die Schicht (30') aus Glas-Metall-Verbindung aufgeschweißt ist (39).

12. Vorrichtung nach Anspruch 11, dadurch gekennzeichnet, daß im Inneren der ersten Hülle die Leitung (37 − 38) die Form eines gestreckten »U« aufweist und daß diese einen kreisförmigen Querschnitt aufweist und mit der Schicht (30') aus der Glas-Metall-Verbindung entlang einer Mantellinie (34) einer der Schenkel des »U« (37) verschweißt ist (39).

13. Vorrichtung nach einem der Ansprüche 1 bis 12, dadurch gekennzeichnet, daß die Schichten aus der Glas-Metall-Verbindung eine Dicke im Bereich zwischen 100 μm und 1 mm aufweisen.

14. Verfahren zur Herstellung einer Vorrichtung nach einem der Ansprüche 1 bis 13, dadurch gekennzeichnet, daß für die Phase der Herstellung des Absorptionsmittels (3) und seines Aufbringens auf der ersten Hülle (2) die folgenden Schritte durchgeführt werden:

— Mischen eines Glaspulvers mit Metallpulver; wobei das Volumenverhältnis des Metalls im Bereich von 70 bis 95% liegt;
— Suspension des Gemisches in einem organischen Bindemittel und Aufbringen einer Schicht (31) des so erhaltenen Materials auf der ersten Hülle (2);
— Beseitigung des organischen Bindemittels durch Trocknen an der freien Luft bei einer Temperatur im Bereich zwischen 300 und 500° C, gefolgt von einer thermischen Behandlung in einer reduzierenden Atmosphäre bei der Erweichungstemperatur des Glases, aus dem die erste Hülle (2) gebildet ist, und des Glases der Glas-Metall-Verbindung; wobei die Erweichungstemperatur im Bereich zwischen 550 und 700° C gewählt ist;
— und direkte Oxidation der auf der ersten Hülle (2) aufgebrachten Materialschicht (31) zur Bildung einer absorbierenden Schicht (32), durch Eintauchen der ersten, mit der Materialschicht (31) bedeckten Hülle (2) in ein oxidierendes Bad.

15. Verfahren nach Anspruch 14, dadurch gekennzeichnet, daß das Aufbringen des Gemisches aus Glaspulver und Metallpulver in Suspension in einem organischen Bindemittel auf der ersten Hülle (2) mittels Spritzpistole, Pinselauftrag oder durch Benetzung erfolgt.

16. Verfahren nach Anspruch 14 oder 15, dadurch gekennzeichnet, daß es einen ersten weiteren Schritt umfaßt, und zwar einen Schritt des Zentrifugierens nach dem Aufbringen des Gemisches aus Glaspulver und Metallpulver in Suspension in einem organischen Bindemittel auf der ersten Hülle (2), dergestalt, daß ein höherer Metallanteil in den oberen Zonen der auf der ersten Hülle (2) aufgebrachten Materialschicht (31) erhalten wird.

17. Verfahren nach Anspruch 14 oder 15, dadurch gekennzeichnet, daß einen zweiten zusätzlichen Schritt umfaßt, und zwar einen Schritt, bei dem eine Metallschicht (33) durch Elektrolyse auf der Materialschicht (31), die auf der ersten Hülle (2) aufgebracht ist, abgelagert wird.

18. Verfahren nach einem der Ansprüche 14 bis 17, dadurch gekennzeichnet, daß es einen dritten zusätzlichen Schritt umfaßt, und zwar einen Schritt, bei dem eine aus einer Metallfolie gebildete Rippe (8) auf die Materialschichten (31 – 33), die auf der ersten Hülle (2) aufgebracht sind, aufgeschweißt wird.

19. Verfahren nach einem der Ansprüche 14 bis 18, dadurch gekennzeichnet, daß das Gemisch aus Metallpulver und Glaspulver in Suspension in einem Bindemittel auf der Außenseite der ersten Hülle (2) aufgebracht ist, um die erste Schicht (31) der die Sonnenenergie absorbierenden Beschichtung zu bilden, und eine Schicht (30') dieses Gemisches auch auf die Innenseite der ersten Hülle (2) aufgebracht ist.

20. Verfahren nach Anspruch 19, dadurch gekennzeichnet, daß das Aufbringen durch Benetzen erfolgt.

21. Verfahren nach Anspruch 19, dadurch gekennzeichnet, daß ein vierter zusätzlicher Schritt ausgeführt wird, bei dem eine Metalleitung (37 – 38) auf die Materialschichten (31 – 33) aufgeschweißt wird, die auf der Innenfläche der ersten Hülle (2) aufgebracht sind.

## Claims

1. Solar engery collector device comprising a first glas envelope (2) associated with means (3) absorbing solar radiation and formed by a coating on one of the faces of the first envelope, this coating (3) comprising at least one surface layer (32) formed by a metal oxide; and a second glass envelope (1) arranged about the first envelope and connected thereto in a manner to form a closed chamber (4) between these two envelopes; the device being characterized in that a material layer (31) formed of a glassmetal composite is deposited on at least the face of the first envelope bearing said coating; the glassmetal composite layer forming one of the layers of said coating.

2. Device in accordance with claim 1, characterized in that the coating (3) further comprises a supplementary layer (33) intermediate the metal oxide surface layer (33) and the glass-metal composite layer (31) and formed of metal deposited by electrolysis on the glass-metal composite layer.

3. Device in accordance with claims 1 or 2, characterized in that the glass-metal composite is homogeneous at any point of the coating.

4. Device in accordance with any of claims 1 and 2, characterized in that the relative glass-metal concentrations of the composite vary in accordance with a predetermined rule, in such a manner that the composite is enriched with metal in its superficial part contacting the metal oxide layer of the supplementary metal layer (33).

5. Device in accordance with any of claims 1 to 4, characterized in that the glass forming said first (2) and second (1) envelopes is identical to that of the glass-metal composite.

6. Device in accordance with any of claims 1 to 5, characterized in that the metal of the glass-metal composite is selected among the following metals: copper, manganese or chromium; or an alloy of these metals.

7. Device in accordance with any of claims 1 to 6, characterized in that, in addition, fins (8) are welded on the glas-metal composite layer (31) or the supplementary metal layer (33).

8. Device in accordance with claim 7, characterized in that the fins (8) are formed by a sheet of metal identical to that of the glass-metal composite; the planes formed by each of said metal sheets being normal to the surface of the glass-metal composite layer (31) or to the supplementary metal layer (33).

9. Device in accordance with any of claims 1 to 8, characterized in that the inner face of the second envelope (1) is further covered by a deposit of semi-reflecting material, this material being tin doped indium oxide $In_2O_3$.

10. Device in accordance with any of claims 1 to 9, characterized in that, the solar energy absorbing coating (3) being located on the outer face of the first envelope (2), a glass-metal composite layer (30') is also deposited on the inner face of said envelope.

11. Device in accordance with claim 10, characterized in that a metallic conduit (37 – 38) in which a fluid (35 – 36) to be heated by the solar radiation is circulated, is arranged inside the first envelope (2), the outer wall of at least a part of the conduit (39) being welded on the glass-metal composite layer (30').

12. Device in accordance with claim 11, characterized in that, inside the first envelope, the conduit (37 – 38) has the shape of an extended »U« and in that the conduit has a circular section and is welded (39) to the glass-metal composite layer (30') along one generatrix (34) of one branch of the »U« (37).

13. Device in accordance with any of claims 1 to 12, characterized in that the glass-metal composite layers have a thickness comprised within the range of 100 µm to 1 mm.

14. Method of producing a device in accordance with any of claims 1 to 13, characterized in that the following steps are performed for obtaining the absorption means (3) and for application thereof on the first envelope (2):

— mixing a glass powder with metal powder; the volume proportion of the metal being comprised within the range of 70 to 95%;

— suspension of the mixture in an organic binder and application of a layer (31) of the thus obtained material on the first envelope (2);

— elimination of the organic binder by curing at the free air and at a temperature within the range of 300 to 500°C, followed by a thermal treatment in a reducing atmosphereat the softening temperature of the glass forming the first envelope (2) and the glass of the glass-metal composite; the softening temperature being selected within the range of 550 to 700°C;

— and direct oxidation of the material layer (31) applied on the first envelope (2) for forming an absorption layer (32), by dipping the first envelope (2) covered with the material layer (31) into an oxidizing bath.

15. Method in accordance with claim 14, characterized in that the application of the mixture of glass powder and metal powder in suspension in an organic binder on the first envelope (2) is performed using a spraying pistol, by brush-painting or by wetting.

16. Method in accordance with any of claims 14 and 15, characterized in that it comprises a first additional step of centrifugation after having applied the mixture of glass powder and metal powder in suspension in an organic binder on the first envelope (2), in a manner to obtain an increased metal proportion in the upper zone of the material layer (31) applied on the first envelope (31).

17. Method in accordance with any of claims 14 or 15, characterized in that it comprises a second supplementary step during which a metal layer (33) is deposited by electrolysis on the material layer (31) applied on the first envelope (2).

18. Method in accordance with any of claims 14 to 17, characterized in that it comprises a third supplementary step during which a fin (8) formed of a metal sheet is soldered on the material layers (31 — 33) deposited on the first envelope (2).

19. Method in accordance with any of claims 14 to 18, characterized in that, the mixture of metal powder and glass powder in suspension in a binder being applied on the outer face of the first envelope (2) to form the first layer (31) of the solar energy absorption coating, a layer (30') of this mixture is also applied on the inner face of the first envelope (2).

20. Method in accordance with claim 19, characterized in that the application is performed by wetting.

21. Method in accordance with claim 19, characterized in that a fourth supplementary step is performed during which a metallic conduit (37 — 38) is welded onto the material layers (31 — 33) applied on the inner face of the first envelope (2).

FIG.1

FIG.2

FIG.3

FIG.4

# FIG.5

# FIG.6

# FIG.7

# FIG.8

# FIG.9

# FIG.10

# FIG.11

FIG.12

FIG.13

FIG.14

FIG.15